Europäisches Patentamt

European Patent Office

Office européen des brevets

(11) Publication number: 0 214 707
A2

# EUROPEAN PATENT APPLICATION

(21) Application number: 86302088.9

(51) Int. Cl.⁴: A21D 2/02

(22) Date of filing: 21.03.86

(30) Priority: 06.09.85 US 773127

(43) Date of publication of application:
18.03.87 Bulletin 87/12

(84) Designated Contracting States:
AT BE CH DE FR GB IT LI LU NL SE

(71) Applicant: NABISCO BRANDS INC.
Nabisco Brands Plaza
Parsippany New Jersey 07054(US)

(72) Inventor: Arciszewski, Henry Eugene
896 Colonial Road
Franklin Lakes New Jersey 07417(US)
Inventor: Porzio, Linda Adele
1 Harrison Road
Kinnelon New Jersey 07405(US)
Inventor: Chiang, Bin Yea
5 Hickory Place
Cedar Knolls New Jersey 07927(US)
Inventor: Spotts, Clyde Emerson, Jr.
39 Pershing Avenue
Ridgewood New Jersey 07450(US)
Inventor: McHugh, Kevin
9 Winters Street
Oakland New Jersey 07463(US)
Inventor: Szwerc, Joseph A.
15 Chapel Road
Mahwah New Jersey 07430(US)

(74) Representative: Quest, Barry et al
M'CAW & CO. 41-51 Royal Exchange Cross
Street
Manchester M2 7BD(GB)

(54) Leavening composition for baked goods.

(57) A leavening composition for use in preparing low-sodium unfermented crackers and other baked goods comprises a mixture of 1.3 to 8 parts of ammonium carbonate, one part by weight of potassium carbonate, and an amount of an acidic component sufficient to provide from 1.5 to 3 moles of acidic hydrogen for each mole of potassium carbonate. A second leavening composition comprises from 40 to 80 percent by weight of ammonium bicarbonate, from 30 to 10 percent by weight of an edible carbonate and from 30 to 10 percent by weight of an edible acidic component. A process for producing crackers, and a dough composition using these leavening compositions, are also disclosed.

## LEAVENING COMPOSITION FOR BAKED GOODS

This invention relates to a leavening composition for baked goods, and to a process for producing crackers using, and a dough composition containing, this leavening composition.

Chemically-leavened (unfermented) crackers are conventionally produced by mixing flour, water, fat or shortening and a leavening composition to produce a dough, and then baking this dough. Leavening compositions used in crackers normally comprise sodium bicarbonate and an acidic component, for example, calcium phosphate monobasic, capable of reacting with the sodium bicarbonate to liberate carbon dioxide and thus leaven the cracker. Such leavening compositions may also contain a small proportion of ammonium bicarbonate.

Our European Patent Application No. 84302088.4 (Publication No. 126,529) discloses that the sodium content of baked goods, including chemically-leavened crackers, can be reduced by replacing part or all of the sodium bicarbonate with potassium carbonate. The leavening systems may also contain ammonium bicarbonate.

It has been found that, when the sodium bicarbonate in a conventional leavening system is replaced with potassium carbonate as described in the aforementioned European Patent Application, the oven spring of the crackers tends to be reduced. It has now also been found that the oven spring can be restored substantially to the values obtained with conventional leavening compositions by greatly increasing the ratio of ammonium bicarbonate to potassium carbonate in the leavening composition.

Accordingly, this invention provides a leavening composition for chemically leavening baked goods, the leavening composition comprising ammonium bicarbonate, potassium carbonate and an edible acidic component capable of reacting with the potassium carbonate to liberate carbon dioxide. The leavening composition of this invention is characterized in that it comprises from 40 to 80 percent by weight of the ammonium bicarbonate, from 30 to 10 percent of the potassium carbonate and from 30 to 10 percent by weight of the edible acidic component, the percentages being based upon the total weight of the ammonium bicarbonate, potassium carbonate and edible acidic component on an anhydrous basis.

This invention also provides a similar leavening composition characterized in that the weight ratio of ammonium bicarbonate (in the form of the monohydrate) to anhydrous potassium carbonate in the leavening composition is from 1.3:1 to 8:1 on an anhydrous basis and the amount of the acidic component is sufficient to provide from 1.5 to 3 moles of acidic hydrogen for each mole of potassium carbonate in the leavening composition.

This invention also provides a process for producing a cracker, this process comprising forming a dough by mixing flour, water, fat or shortening and a leavening composition, and baking the dough to form the cracker. The process is characterized in that the leavening composition used is a leavening composition of the invention.

Finally, this invention provides a dough composition for producing a cracker, this dough composition comprising flour, water, fat or shortening and a leavening composition. The dough composition is characterized in that the leavening composition is a leavening composition of the invention.

In carrying out the process of the invention, or in forming the dough compositions of the invention, it is not necessary that the ingredients of the leavening composition (i.e., the ammonium bicarbonate, potassium carbonate and edible component) be mixed prior to addition to the dough; instead the individual ingredients of the leavening composition may be added separately to the dough.

The percentages of the components of the leavening compositions of the present invention are calculated on an anhydrous basis, i.e., with the weights of all components calculated in their anhydrous forms, ignoring any water of crystallization which may be present. The components need not actually be present in their anhydrous forms; for example, the ammonium bicarbonate is conveniently used in the form of its monohydrate, while the preferred edible acidic component, calcium phosphate monobasic (discussed below) also is desirably used in the form of its monohydrate.

The choice of a leavening system for a low-sodium unfermented cracker, or other unfermented or chemically-leavened baked goods, involves consideration of a number of properties desired in the final cracker or other baked good, including sodium content, oven spring, browning (the production of a brown color in the baked cracker), and the pH of the baked cracker. Of the acidic components available for use in chemical leavening systems, calcium phosphate monobasic is usually preferred since it not only acts as the acidic component of the leavening system but also promotes browning of the cracker. Increasing the proportion of ammonium bicarbonate in the leavening system increases oven spring but may affect the pH, and hence the taste, of the final product, since ammonium bicarbonate is less alkaline than potassium carbonate. Potassium carbonate tends to produce less oven spring than ammonium bicarbonate, but its more alkaline character is useful in increasing the pH of the final cracker or other unfermented or chemically-leavened baked goods to within the desired range.

It has been found that unfermented crackers having a desirable combination of browning, oven spring and pH can be produced using leavening systems containing from 1.3 to 8, and preferably 2.5 to 5, parts by weight of ammonium bicarbonate monohydrate per part by weight of potassium carbonate on an anhydrous basis. Such leavening systems may contain from 30 to 10 (preferably 25 to 16) percent by weight of calcium phosphate - (monobasic) or other acidic component, from 40 to 80 (preferably 50 to 70) percent by weight of ammonium carbonate and from 30 to 10 - (preferably from 22 to 14) percent by weight of potassium carbonate, all percentages being based upon the total weight of the calcium phosphate, ammonium bicarbonate and potassium carbonate present and being on an anhydrous basis. A specific preferred leavening system, the use of which is illustrated in the Example below, has an ammonium carbonate monohydrate: potassium carbonate weight ratio of 4:1 and comprises 19.5 percent by weight of calcium phosphate, monobasic, monohydrate, 64.4 percent by weight of ammonium bicarbonate monohydrate and 16.1 percent by weight of anhydrous potassium carbonate.

The amounts of such calcium phosphate/ammonium bicarbonate/potassium carbonate leavening systems needed to produce a desired degree of oven spring can be determined by routine empirical tests, as will be apparent to those skilled in the art. In general, it is preferred to employ from 1.5 to 3 parts by weight of the leavening system per 100 parts by weight of flour in the dough.

The cracker produced by the process of the invention desirably has sodium chloride present as a topping on one of its surfaces, and preferably at least 85 (preferably at least 90 and most desirably at least 95) percent by weight of the sodium in the cracker, including the topping, is present as sodium chloride.

Conventional formulations can be used for the production of crackers according to the process of the present invention except that the sodium bicarbonate is replaced with potassium carbonate. Replacing all of the sodium bicarbonate with potassium carbonate allows for substantially all of the sodium content to be from sodium chloride. The sodium chloride contributes to flavor enhancement and the elimination of a bland taste to a much greater extent than does sodium bicarbonate. Thus, by using potassium carbonate to replace sodium bicarbonate in crackers in accordance with the present invention, one can increase the proportion of sodium in the baked good which is present in the form of sodium chloride. This is especially advantageous since in crackers a salty taste is desired, and thus the use of the leavening composition of the invention enables one to achieve a given degree of salty taste at a lower sodium content, or a greater degree of salty taste at a given sodium content. In a conventional cracker in which sodium bicarbonate is used as part of the leavening agent, the sodium bicarbonate will supply about 25 percent of the sodium in the baked cracker, and little, if any, of the sodium derived from sodium bicarbonate ends up as sodium chloride. Thus, at most, only about 75 percent of the sodium in the baked cracker is in the form of sodium chloride, whereas by replacing part or all of the sodium bicarbonate with potassium carbonate in accordance with the present invention one can achieve crackers in which at least 85 percent, and in most cases at least 90 or 95 percent of the sodium in the cracker is in the form of sodium chloride. Total replacement of sodium bicarbonate with potassium carbonate can yield crackers in which the only substantial source of sodium is sodium chloride. For example, the preferred unfermented cracker of the invention described in the Example below contains 60 mg. of sodium ion per serving, of which 58 mg. (about 97 percent) is in the form of sodium chloride, the remaining 2 mg. being in the form of unavoidable sodium in the flour and other dough ingredients.

In preparing crackers by the method of the present invention, the ingredients used are basically the same as when preparing fermented crackers, as described in the aforementioned European Patent Application No. 84302088.4, except of course that no yeast is employed. Thus, the ingredients of the dough comprise flour, fat, shortening, water, potassium carbonate, ammonium bicarbonate and a food grade acidic compound to effect leavening. The flour used in unfermented crackers does not generally need to be as strong as the sponge flour used in fermented crackers, although the flour used in unfermented crackers should still be moderately strong. As in fermented crackers, the fat or shortening used in unfermented crackers may be lard or a vegetable shortening. Advantageously, the dough used to prepare the fermented crackers also comprises malt.

In the method of the present invention, it has been found that crackers having desirable properties are produced by using a dough comprising, per 100 parts by weight of flour, from 20 to 30 parts by weight of water, from 0 to 3 parts by weight diastatic malt, from 4 to 20 total parts by weight of fat and shortening, and from 0.25 to 1.5 parts by weight of potassium carbonate. In such a dough, the use of from 1 to 2 parts by weight of calcium phosphate per 100 parts by weight of flour gives an appropriate pH in the baked cracker. The pH range of the crackers is suitably within the range of from 6.5 to 8.0, desirably from 6.7 to 8.0, and most desirably from 7.3 to 7.7, since it has been found that pH's within this range produce the optimum taste.

In addition to the aforementioned ingredients, doughs used to prepare crackers of the snack type by the method of the present invention desirably contain sugar, since sugar helps to provide the taste expected in a snack cracker. The sugar is desirably added as a mixture of sucrose and high fructose corn syrup, preferred amounts of these sweetening agents being, per 100 parts by weight of flour in the dough, from 4 to 12 parts by weight of sucrose and from 1 to 5 parts by weight of high fructose corn syrup.

When producing crackers by the method of the present invention, the conventional mixing steps of a creaming stage followed by a dough-up stage may be employed. In the creaming stage, the shortening, at least part of the water and part of the flour are blended together. In the dough-up stage, the remaining flour and the potassium carbonate are added to form the final dough. To ensure uniform distribution of the potassium carbonate throughout the dough, the flour added in the dough-up stage is desirably distributed substantially uniformly over the surface of the mixture formed in the creaming stage and the potassium carbonate is thereafter distributed uniformly over the surface of the flour. Alternatively, an aqueous solution of the potassium carbonate may be added to the other ingredients of the dough. The ammonium bicarbonate may also be added in the form of an aqueous solution.

Lamination, cutting, baking and post-baking treatment of crackers produced by the process of the present invention can be effected in the conventional manner, as described in the aforementioned European Patent Application No. 84302088.4.

Under current United States Food and Drug Administration proposals, a "low sodium" baked good, which includes sponge goods, unfermented type crackers, cookies and cakes, has a sodium content of from 35 to 140 mg. Na$^+$ per serving, while a "very low sodium" baked good has a sodium content of less than or equal to 35 mg. Na$^+$ per serving. Also, a "no-sodium" baked good has a sodium content of less than or equal to 5 mg. Na$^+$ per serving. According to FDA proposed rules, products which contain not more than 20% in excess of the value stated for sodium declared in the label are considered to be properly labeled. "Very low-sodium" products and "no-sodium" products may accordingly contain up to 42 mg. per serving and up to 6 mg. per serving, respectively. The weight of a "serving" depends upon the type of baked good. As used herein, a serving is 14.2 g. ($\frac{1}{2}$ oz.) for crackers. The present invention provides a process for reducing the sodium content of crackers or the baked goods to a "low sodium", "very low sodium" or "no sodium" level as defined above. The sodium content is based upon the final baked product (i.e., the serving) and includes sodium from topping salt (sodium chloride) as well as from salt within the final product. As noted above, because the present invention allows one to reduce the amount of sodium present in baked goods in forms other than sodium chloride, the invention permits one to obtain a given degree of salty taste in baked goods with a lower sodium content than has been possible in prior art baked goods. Crackers of the present invention, like prior art crackers, may have sodium present in the dough (dough sodium chloride) and/or as topping applied on one surface of the cracker. The proportions of the total sodium chloride in the dough and the topping affect the taste of the cracker. If all the sodium chloride is present in the dough, it is less effective in giving a salty taste to the cracker than if at least part of the sodium chloride is present in the topping. On the other hand, if all the sodium chloride is present in the topping and none in the dough, a very strong initial sal taste is imparted to the cracker, but this strong initial taste may tend to fade to a rather bland taste of the unsalted dough.

In general, it has been found that, in the case of unfermented crackers, it is desirable for sodium chloride to be added to the dough in an amount sufficient to provide at least 20 mg. of sodium ion per 14.2 g. serving of the baked cracker (equivalent to about 0.53 parts by weight of sodium chloride per 100 parts by weight of flour in a typical cracker dough), and for sodium chloride to be present in the topping in an amount sufficient to provide at least 25 mg. of sodium ion per 14.2 g. serving of the baked cracker. It should be noted that, if amounts of topping salt providing less than about 25 mg. of sodium ion per 14.2 g. serving of the cracker are used, difficulties may be experienced in providing a sufficiently even distribution of topping salt using conventional apparatus for the spreading of topping salt. It is especially preferred that the unfermented crackers contain, per 14.2 g. serving, at least 25 mg. of sodium ion in the dough salt and at least 30 mg. of sodium in the topping salt, with a total sodium ion content not in excess of 65 mg. per serving.

The present invention is further illustrated in the following Example, in which all percentages, parts and proportions are by weight.

## EXAMPLE

This Example illustrates the replacement of sodium bicarbonate with potassium carbonate in unfermented crackers in accordance with the process of the present invention, with a simultaneous increase in the proportion of ammonium bicarbonate in the leavening agent.

| Ingredient | Parts by weight |
|---|---|
| Flour | 100.0 |
| Shortening | 10.0 |
| Sugars | 11.0 |
| Malt | 1.25 |
| Dough salt | 0.69 |
| Ammonium bicarbonate monohydrate | 1.50 |
| Potassium carbonate (anhydrous monohydrate) | 0.38 |
| Calcium phosphate, monobasic | 0.45 |
| Water | 20.0 |

The dough was prepared by combining the shortening, sugars, malt, dough salt and part of the water in a creaming stage, adding the flour on top of the creamed mixture and sifting the calcium phosphate on top of the flour. After some mixing, the ammonium bicarbonate and potassium carbonate were added in the form of aqueous solutions, and the resultant mixed for an extended period and proofed for two hours. The resultant dough was laminated, cut 0.75 parts of topping salt per 100 parts of flour, applied and the crackers baked.

The resultant crackers had a good appearance and a proper degree of oven spring, and hence a good flaky texture. The sodium content of the crackers was 60 mg. per 14.2 g. serving.

Experiments were conducted in which the proportions of calcium phosphate, ammonium bicarbonate and potassium carbonate in a dough were varied, as was the mixing technique employed. A formulation and mixing technique, which gave good oven spring were as follows:

## Claims

1. A leavening composition for chemically leavening baked goods, the leavening composition comprising ammonium bicarbonate, potassium carbonate and an edible acidic component capable of reacting with the potassium carbonate to liberate carbon dioxide, characterized in that the leavening comprises from 40 to 80 percent of by weight of the ammonium bicarbonate, from 30 to 10 percent of the potassium carbonate and from 30 to 10 percent by weight of the edible acidic component, the percentages being based upon the total weight of the ammonium bicarbonate, potassium carbonate and edible acidic component on an anhydrous basis.

2. A leavening composition for chemically leavening baked goods, the leavening composition comprising ammonium bicarbonate, potassium carbonate and an edible acidic component capable of reacting with the potassium carbonate to liberate carbon dioxide, characterized in that the weight ratio of ammonium bicarbonate (in the form of the monohydrate) to anhydrous potassium carbonate in the leavening composition is from 1.3:1 to 8:1 on an anhydrous basis and the amount of the acidic component is sufficient to provide from 1.5 to 3 moles of acidic hydrogen for each mole of potassium carbonate in the leavening composition.

3. A leavening composition according to Claims 1 or 2 characterized in that the acidic component is calcium phosphate monobasic.

4. A leavening composition according to Claim 3 characterized in that it comprises from 25 to 16 percent by weight of calcium phosphate, from 50 to 70 percent by weight of ammonium bicarbonate and from 22 to 14 percent by weight of potassium carbonate on an anhydrous basis.

5. A leavening composition according to Claim 3 or 4 characterized in that the weight ratio of ammonium bicarbonate to potassium carbonate is from 2.5:1 to 5:1 and the weight ratio of calcium phosphate to potassium carbonate is from 0.78:1 to 1.6:1, both ratios being on an anhydrous basis.

6. A process for producing a cracker, the process comprising forming a dough by mixing flour, water, fat or shortening and a leavening composition, and baking the dough to form the cracker, characterized in that the leavening composition used is a leavening composition in accordance with any one of the preceding claims.

7. A process according to Claim 6 characterized in that the total weight of calcium phosphate, ammonium bicarbonate and potassium carbonate added is from 1.5 to 3 parts per 100 parts by weight of the flour in the dough.

8. A process according to Claims 6 or 7 characterized in that sodium chloride is incorporated into the dough.

9. A process according to Claim 8 wherein the amount of sodium chloride incorporated into the dough is sufficient to provide at least 20mg. of sodium ion per 14.2g. serving of the baked cracker.

10. A process according to any one of Claims 6 to 9 characterized in that sodium chloride is added as a topping to the cracker..

11. A process according to Claim 10 characterized in that the amount of sodium chloride applied as a topping is sufficient to provide at least 25mg. of sodium ion per 14.2g. serving of the baked cracker.

12. A process according to any one of the Claims 6 to 11 characterized in that the total sodium content of the baked cracker is not greater than 65mg. of sodium ion per 14.2g. serving.

13. A process according to Claim 12 characterized in that the cracker comprises at least 25mg. of sodium in the form of sodium chloride in the dough, and at least 30mg. of sodium in the form of sodium chloride in the topping, per 14.2g. serving of the baked cracker.

14. A process according to any one of the Claims 6 to 13 characterized in that the dough is essentially free of sodium bicarbonate.

15. A baked cracker characterized in that it is produced by a process according to any one of the Claims 6 to 14.

16. A cracker according to Claim 15 characterized in that at least 90 percent of the sodium in the cracker is present as sodium chloride.

17. A dough composition for producing a cracker, the dough composition comprising flour, water, fat or shortening and a leavening composition, characterized in that the leavening composition is a leavening composition in accordance with any of Claims 1 to 5.

18. A dough composition according to Claim 17 characterized in that the total weight of calcium phosphate, ammonium bicarbonate and potassium carbonate added is from 1.5 to 3 parts per 100 parts by weight of flour in the dough.

19. A dough composition according to Claims 17 or 18 characterized in that it also comprises sodium chloride.

20 A dough composition according to Claim 18 characterized in that the amount of sodium chloride is at least 0.53 parts by weight per 100 parts by weight of flour in the dough.

21. A dough composition according to any one of the Claims 17 to 20 characterzed in that it is essentially free from sodium bicarbonate.